# FASCICULE DE BREVET EUROPEEN

(11) **EP 4 374 346 B1**
(45) Date de publication et mention de la délivrance du brevet: **10.06.2026**
(21) Numéro de dépôt: 22757618.8
(22) Date de dépôt: 21.07.2022
(51) Int. Cl.: G06V 40/13, G06V 10/141

(54) **PROCEDE DE CAPTURE D'IMAGE PAR CANAUX AUXILIAIRES, A L'AIDE D'UN ECRAN D'AFFICHAGE**
AUF HILFSKANÄLEN BASIERENDES VERFAHREN ZUR BILDERFASSUNG UNTER VERWENDUNG EINES BILDSCHIRMS
AUXILIARY-CHANNEL-BASED METHOD FOR CAPTURING IMAGES USING A DISPLAY SCREEN

(30) Priorité: 21.07.2021 FR 2107865
(43) Date de publication de la demande: 29.05.2024
(73) Titulaire: LEDGER, 75002 Paris (FR)
(72) Inventeur: CHARRAT, Bruno, 13090 AIX EN PROVENCE (FR)
(74) Mandataire: Marchand, André
(86) Numéro de dépôt international: PCT/FR2022/051451
(87) Numéro de publication internationale: WO 2023/002130

(56) Documents cités:
- US-A1- 2015 228 221
- US-A1- 2020 258 448
- US-B1- 9 207 851

## Description

La présente invention concerne un procédé de capture d'image et en particulier d'une empreinte digitale sur un appareil disposant d'un dispositif d'affichage d'image comportant un écran d'affichage à diodes électroluminescentes (LED - "Light-Emitting Diode").

La plupart des appareils incluant un dispositif d'affichage et dotés d'une fonctionnalité de capture d'empreinte digitale comportent un composant de capture d'empreinte dédié. La prévision d'un tel composant augmente le coût de l'appareil, si bien que cette fonctionnalité est généralement réservée aux appareils haut de gamme.

Les écrans d'affichage à LED, OLED ("Organic LED") ou AMOLED ("Active-Matrix OLED") sont couramment utilisés dans de nombreux appareils pour afficher du texte, des images et des vidéos. De tels écrans sont formés de LEDs disposées en lignes et en colonnes, et commandées par exemple ligne par ligne d'une manière multiplexée dans le temps. A chaque sélection d'une ligne, des pilotes de colonne sont activés et désactivés sélectivement et simultanément pour activer les LEDs situées aux intersections de la ligne sélectionnée et des colonnes, en fonction des pixels d'une image à afficher. Dans un écran couleur, chacun des pixels d'une image peut être formé par plusieurs LEDs de différentes couleurs. Il est à noter que les colonnes ne sont pas nécessairement perpendiculaires aux lignes de l'écran d'affichage.

La plupart des LEDs peuvent fonctionner aussi comme des photodiodes. Ainsi, les brevets US 7598949 et US 9632344 ont proposé d'utiliser cette fonctionnalité en décrivant un écran d'affichage à LEDs adapté pour capter notamment une empreinte digitale d'un doigt posé sur l'écran d'affichage. Cependant, la mise en œuvre de cette fonctionnalité fait intervenir des circuits supplémentaires, et notamment un circuit d'acquisition par rangée de LEDs de l'écran d'affichage, pour acquérir des signaux relatifs à la lumière captée par une rangée de LEDs, et un circuit pour contrôler les circuits d'acquisition et traiter les signaux qu'ils produisent. L'ajout d'une fonctionnalité de capture d'image impose donc de modifier d'une manière importante l'architecture interne du dispositif d'affichage en y ajoutant du câblage et des circuits supplémentaires.

Le document "Applications of light emitting diodes as sensors of their own emitted light", VANNACCI E. ET AL, OPTO-ELECTRONICS REVIEW, vol. 27, no. 4, 1 décembre 2019 (2019-12-01) pages 355-362, indique qu'une diode électroluminescente (LED) peut être utilisée comme capteur de lumière, et que son spectre de lumière émise et son spectre de sensibilité peuvent se chevaucher partiellement. Le document enseigne que des LEDs commerciales peuvent être utilisées comme émetteurs de lumière et simultanément comme capteurs de la partie réfléchie de la lumière émise par elles-mêmes. Pour une utilisation en capteur de lumière, le document propose de fixer un paramètre électrique de la diode et de mesurer un autre paramètre électrique, par exemple fixer le courant consommé et mesurer les variations de tension à ses bornes, ou fixer la tension appliquée à la LED et mesurer les variations du courant qui la traverse.

Cette méthode nécessite des moyens de contrôle de courant ou de tension aux bornes d'une LED individuelle. Or, sans modification, une matrice de LEDs conventionnelle ne permet généralement qu'un contrôle global du courant consommé par toutes les LEDs activées d'une ligne sélectionnée.

US 2020/258448 A1 divulgue un dispositif d'affichage comprenant une pluralité d'éléments de pixels à diode électroluminescente (LEDs) disposés en matrice avec plusieurs colonnes et plusieurs rangées, ainsi qu'un circuit de commande configuré pour activer sélectivement un premier élément de pixel LED afin qu'il émette de la lumière, et activer simultanément un second élément de pixel LED pour détecter la lumière.

US 2015/228221 A1 divulgue un procédé de vérification de l'affichage d'images sur un écran électronique, comprenant: afficher une image sur l'écran électronique, mesurer une valeur d'un paramètre d'affichage pendant l'affichage de l'image, comparer la valeur mesurée du paramètre d'affichage avec une valeur de référence correspondant à une image de référence ; et, si la valeur mesurée correspond à la valeur de référence, et déterminer que l'image affichée correspond à l'image de référence. Un écran électronique à diodes électroluminescentes est utilisée et la consommation d'énergie d'une partie de l'écran électronique est utilisée comme paramètre d'affichage.

US 9 207 851 B1 divulgue une matrice de diodes électroluminescentes positionnée derrière une couche de cristaux liquides d'un dispositif d'affichage. Les diodes électroluminescentes fonctionnent à la fois en mode émission de lumière et en mode détection de lumière. Le dispositif d'affichage est capable de détecter des objets ou des doigts s'approchant ou en contact avec la surface avant de l'écran du dispositif, en se basant sur les variations de lumière incidente sur la matrice observées par une ou plusieurs des diodes électroluminescentes fonctionnant en mode détection de lumière.

Il est donc souhaitable de réaliser un dispositif d'affichage à LED disposant d'une fonctionnalité de capture d'image, tel que la capture d'une empreinte digitale, sans avoir à modifier l'architecture du dispositif d'affichage, et un procédé permettant d'utiliser la propriété des LEDs susmentionnées, d'être à la fois photoémetteur et photodétecteur, sans ajout de moyens de mesure particuliers dans la structure interne du dispositif d'affichage.

Pour obtenir un signal image d'un objet posé sur un écran d'affichage comprenant une matrice de LEDs, la présente invention propose une méthode d'analyse des variations de la consommation électrique globale aux bornes de la matrice de LEDs, à partir d'une mesure de courant, de tension, ou autre grandeur représentative, tel un rayonnement électromagnétique. Cette méthode est similaire aux méthodes d'analyse de la consommation électrique par canaux auxiliaires, permettant de découvrir la valeur d'une clé secrète pendant qu'un circuit intégré procède à un calcul cryptographique, par observation des fluctuations de la tension ou du courant à ses bornes, ou du rayonnement électromagnétique qu'il émet. L'analyse des variations de la consommation électrique est synchronisée avec le balayage des pixels de la matrice de LEDs, et permet de déduire la position et la forme de l'objet posé sur l'écran d'affichage.

Plus particulièrement, des modes de réalisation de l'invention concernent un procédé de génération d'un signal image d'un objet selon la revendication 1.

Selon un mode de réalisation, l'acquisition de chaque mesure de consommation électrique du dispositif d'affichage au cours de l'affichage d'une image comprend l'acquisition d'une pluralité de mesures de consommation électrique en affichant la même image plusieurs fois, et l'acquisition de la pluralité de mesures des variations de la consommation électrique est faite par calcul mathématique ou intelligence artificielle sur la base de la pluralité de mesures de consommation électrique obtenue pour chaque image affichée plusieurs fois .

Selon un mode de réalisation, chaque image de la série d'images représente le même motif, ou, de façon équivalente, la série d'image ne comprend qu'une image, le faisceau lumineux étant invariant, comprenant l'étape consistant à balayer la surface de l'objet en déplaçant l'objet par rapport au faisceau lumineux.

Selon un mode de réalisation, l'affichage de chaque image comprend la sélection successive de groupes de LEDs comprenant chacun au moins une LED, et la mesure des variations de la consommation électrique du dispositif est obtenue en comparant sa consommation électrique lors de la sélection d'un groupe de LEDs pour une première position de l'objet, avec sa consommation électrique lors de la sélection du même groupe de LEDs pour des positions ultérieures de l'objet en déplacement, et ce pour chaque groupe de LEDs sélectionné lors de l'affichage d'une image.

Selon un mode de réalisation, chaque image de la série d'images représente un motif différent, , pour faire varier le faisceau lumineux, l'objet étant fixe par rapport au dispositif d'affichage.

Selon un mode de réalisation, l'affichage de chaque image et d'un motif attribué à l'image comprend la sélection successive de groupes de LEDs comprenant chacun au moins une LED, et la mesure des variations de la consommation électrique du dispositif est obtenue en comparant sa consommation électrique lors de la sélection de chaque groupe de LEDs pendant l'affichage d'une image, avec sa consommation électrique lors de la sélection d'un autre groupe de LEDs pendant l'affichage d'une image précédente, et ainsi de suite pour chaque image suivante, les groupes de LEDs sélectionnés pour lesquels les variations de la consommation électrique du dispositif sont mesurées d'une image à l'autre étant des groupes de même rang selon un ordre prédéterminé de sélection des LEDs lors de l'affichage de chaque image.

Selon un mode de réalisation, la série d'images représente le même motif, ou, de façon équivalente, la série d'image ne comprend qu'une image, la génération du signal image de l'objet comprend des étapes consistant à déterminer des écarts de consommation électrique en retranchant de chaque mesure de consommation électrique une mesure de référence respective acquise en l'absence d'objet dans le faisceau lumineux, et la mesure des variations de la consommation électrique du dispositif est obtenue en comparant sa consommation électrique lors de la sélection d'un groupe de LEDs en présence de l'objet, avec sa consommation électrique lors de la sélection du même groupe de LEDs en l'absence de l'objet.

Selon un mode de réalisation, l'objet est un profil d'empreinte digitale.

Selon un mode de réalisation, l'objet est une empreinte digitale et l'affichage de chaque image et d'un motif attribué à l'image comprend la sélection successive de groupes de LEDs comprenant chacun au moins une LED, chaque image de la série d'images représente le même motif, ou, de façon équivalente, la série d'image ne comprend qu'une image, le procédé comprenant une étape de mémorisation de la consommation électrique de l'écran d'affichage lors de l'activation de chaque groupe de LEDs en présence de l'empreinte digitale d'un utilisateur authentique, puis une étape de comparaison avec la consommation électrique mémorisée de la consommation électrique de l'écran d'affichage lors de l'activation de chaque groupe de LEDs en présence d'une empreinte digitale à authentifier .

Selon un mode de réalisation, les mesures de signaux représentatifs de variations de la consommation électrique du dispositif d'affichage sont acquises selon l'une ou l'autre des méthodes suivantes ou une combinaison de celles-ci : en mesurant une tension électrique d'alimentation du dispositif d'affichage ; en mesurant une intensité d'un courant d'alimentation du dispositif d'affichage ; en mesurant une intensité d'un courant transitant par une liaison à la masse du dispositif d'affichage ; en mesurant un rayonnement électromagnétique émis par le dispositif d'affichage ou l'écran d'affichage.

Selon un mode de réalisation, les images de la série d'images sont affichées ligne par ligne de LEDs, les LEDs d'une ligne étant activées simultanément pour afficher une ligne d'images, le procédé comprenant des étapes consistant à mesurer les variations de la consommation électrique du dispositif d'affichage pour chaque ligne d'une image de la série d'images affichées, à partir d'un signal de synchronisation transmis au début de l'affichage de chaque image de la série d'images, ou en détectant un motif particulier dans les mesures de signaux acquises, le motif particulier étant situé en une position définie dans chaque image de la série d'images.

Selon un mode de réalisation, l'acquisition des mesures de signaux de variation de la consommation électrique du dispositif d'affichage est limitée à un ensemble de LEDs correspondant à une partie de l'écran seulement.

Selon un mode de réalisation, le procédé comprend une étape de sélection d'une couleur de LED pour afficher le ou les motifs de la série d'images.

Des modes de réalisation concernent également un appareil comprenant un dispositif d'affichage, un processeur connecté au dispositif d'affichage et un organe d'acquisition de mesures de signaux représentatifs de la consommation électrique du dispositif d'affichage, l'organe d'acquisition étant connecté au processeur, le processeur étant configuré pour mettre en œuvre le procédé décrit ci-dessus.

Selon un mode de réalisation, l'organe d'acquisition de mesures de signaux représentatifs de consommation électrique comprend au moins l'un des moyens suivants : une liaison connectée à une borne d'alimentation du dispositif d'affichage et à une entrée d'un amplificateur, une résistance montée en série sur une liaison d'alimentation connectée à la borne d'alimentation du dispositif d'affichage, et un amplificateur différentiel connecté aux bornes de la résistance, une résistance interposée entre une borne de connexion du dispositif d'affichage à une masse de l'appareil et la masse de l'appareil, et un amplificateur connecté à la borne de connexion à la masse, une sonde électromagnétique placée à proximité d'une matrice de LEDs de lumière du dispositif d'affichage, la sonde étant connectée à un amplificateur différentiel.

Des exemples de réalisation de l'invention seront décrits dans ce qui suit, à titre non limitatif en relation avec les figures jointes parmi lesquelles :
la figure 1 représente schématiquement un appareil comportant un dispositif d'affichage et un organe de mesure de la consommation électrique du dispositif d'affichage, selon un mode de réalisation,
les figures 2, 3 et 4 représentent schématiquement des exemples de réalisation d'appareils comportant un dispositif d'affichage et un organe de mesure d'un signal représentatif de la consommation électrique du dispositif d'affichage,
la figure 5 représente schématiquement un groupe de zones émettrices de lumière d'un écran d'affichage de type LED classique,
la figure 6A et la figure 6B sont des vues schématiques, respectivement en coupe et en vue de dessus, d'un groupe de pixels d'un écran d'affichage de type OLED classique,
la figure 7 représente schématiquement un groupe de pixels du dispositif d'affichage,
les figures 8A, 8B, 8C, 8D représentent un groupe de pixels du dispositif d'affichage à différents instants, en correspondance avec un signal représentatif de consommation électrique du dispositif d'affichage,
la figure 9 est un organigramme montrant un mode de réalisation du procédé de l'invention, et
la figure 10 représente un exemple de motif affiché en correspondance avec un signal de consommation du dispositif d'affichage.

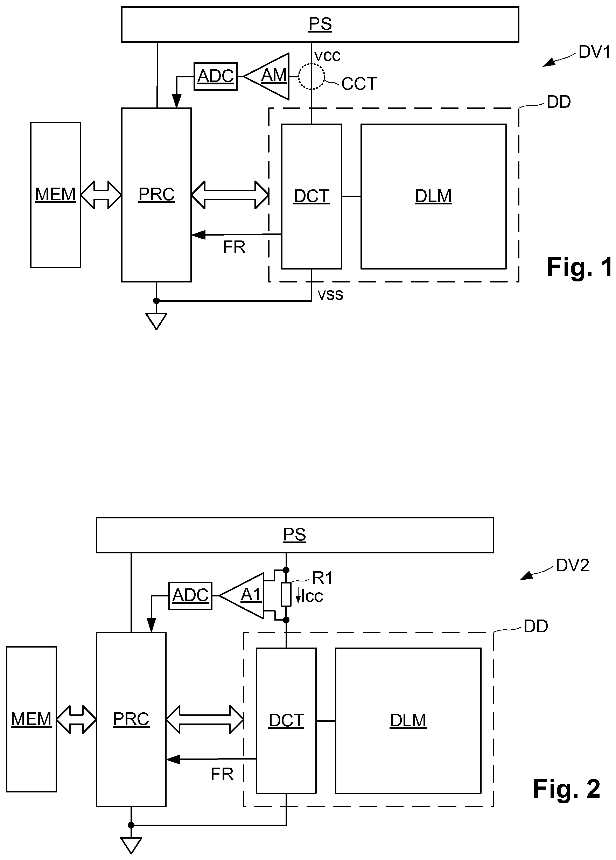

La figure 1 représente un appareil DV1 selon un premier mode de réalisation permettant de mettre en œuvre le procédé selon l'invention. L'appareil DV1 comprend un processeur PRC, par exemple de type microprocesseur ou microcontrôleur, des mémoires MEM dont une mémoire image, un dispositif d'affichage DD et un circuit d'alimentation PS alimentant le processeur PRC et le dispositif d'affichage DD. Le dispositif d'affichage DD comprend des circuits de contrôle DCT et une matrice d'affichage DLM comportant une multiplicité de zones émettrices de lumière disposées en lignes et en colonnes perpendiculaires aux lignes ou non. La matrice DLM est par exemple de type à LEDs, OLED ou AMOLED et forme un écran d'affichage avec une plaque transparente fixée sur la matrice. Les circuits de contrôle DCT comprennent une borne d'alimentation recevant une tension VCC fournie par le circuit d'alimentation PS et une borne VSS reliée à la masse de l'appareil DV1. Les circuits de contrôle DCT fournissent au processeur PRC un signal de synchronisation FR indiquant l'instant de début de l'affichage de chaque image ou de chaque trame d'image par la matrice de pixels DLM.

Selon un mode de réalisation, l'appareil DV1 comprend un circuit de capture CCT d'un signal de consommation représentatif de la consommation globale électrique instantanée du dispositif d'affichage DD, un amplificateur AM pour amplifier le signal de consommation global fourni par le circuit CCT et un convertisseur analogique/numérique ADC pour convertir le signal de consommation global amplifié en données numériques qui sont fournies au processeur PRC. Selon un exemple de réalisation, le circuit de capture CCT peut être simplement une liaison électrique entre l'entrée de l'amplificateur AM et la liaison transmettant la tension VCC entre le circuit d'alimentation et les circuits de contrôle DCT du dispositif d'affichage DD.

Le processeur PRC est configuré pour exploiter le signal de consommation global numérisé afin de former une image d'un objet posé sur l'écran d'affichage du dispositif d'affichage DD ou maintenu à proximité de ce dernier, ou un signal représentatif d'une image de l'objet.

Il est à noter que le processeur PRC peut comporter un convertisseur analogique/numérique interne accessible via une entrée analogique du processeur. Dans ce cas, il n'est pas nécessaire de prévoir le convertisseur ADC. L'amplificateur AM peut également ne pas être nécessaire selon le type de convertisseur utilisé. Le signal de consommation fourni par le circuit de capture CCT peut également être directement exploité sans qu'il soit nécessaire de prévoir un amplificateur et/ou un convertisseur analogique/numérique.

La figure 2 représente un appareil DV2 selon un deuxième mode de réalisation permettant de mettre en œuvre le procédé selon l'invention, l'appareil DV2 comportant un circuit de capture selon un second exemple de réalisation. Le circuit de capture comprend ici une résistance R1 montée en série entre le circuit d'alimentation PS et la borne d'entrée de la tension VCC des circuits de contrôle DCT de la matrice de pixels DLM. Les deux bornes de la résistance R1 sont connectées respectivement à deux entrées d'un amplificateur différentiel A1 dont la sortie est connectée à l'entrée du convertisseur ADC ou sur une entrée analogique du processeur PRC conduisant à un convertisseur ADC interne au processeur.

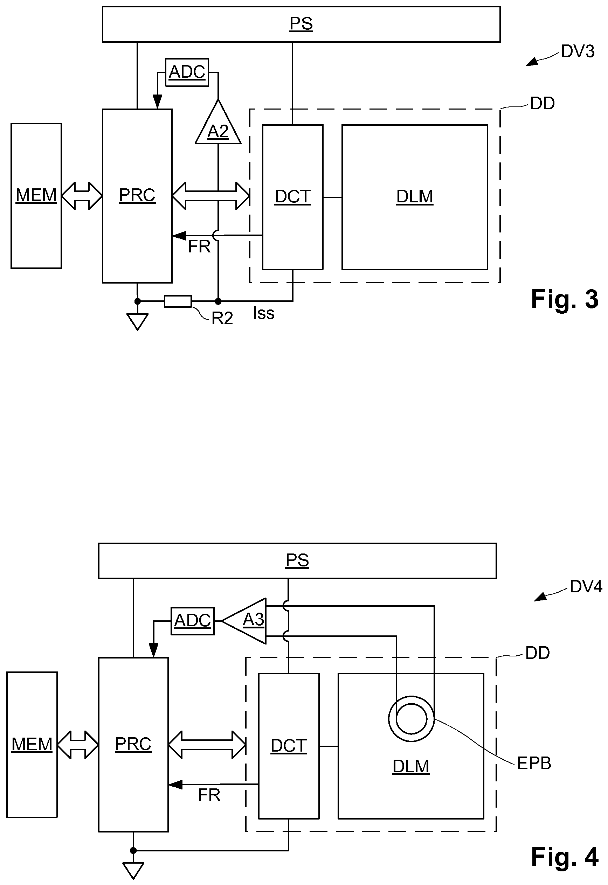

La figure 3 représente un appareil DV3 comportant un circuit de capture selon un troisième exemple de réalisation, permettant également de mettre en œuvre le procédé selon l'invention. Le circuit de capture comprend une résistance R2 montée en série entre la masse et la borne de connexion à la masse des circuits de contrôle DCT. La borne de connexion à la masse des circuits de contrôle DCT est connectée à l'entrée d'un amplificateur A2 dont la sortie est connectée à l'entrée du convertisseur ADC ou sur une entrée analogique du processeur PRC conduisant à un convertisseur ADC interne au processeur.

La figure 4 représente un appareil DV3 comportant un circuit de capture selon un quatrième exemple de réalisation, permettant également de mettre en œuvre le procédé selon l'invention. Le circuit de capture comprend une sonde électromagnétique EPB couplée à la matrice de pixels DLM de manière à fournir un signal représentatif de la consommation électrique globale instantanée de la matrice d'affichage DLM. La sonde EPB comporte deux bornes de sortie connectées à des entrées respectives d'un amplificateur différentiel A3 comportant une sortie connectée à l'entrée du convertisseur ADC.

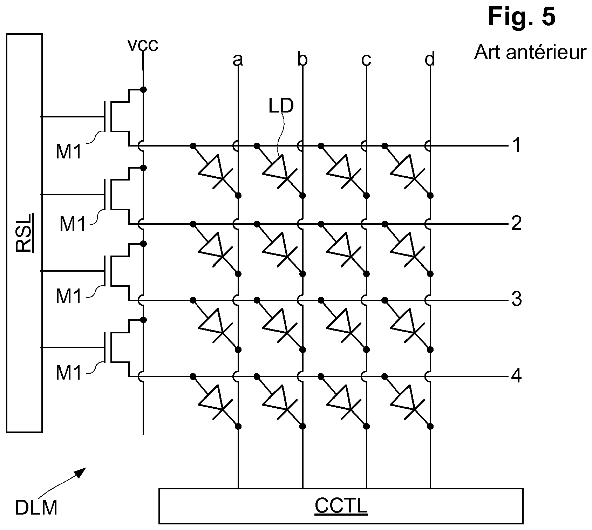

La figure 5 représente un groupe de LEDs d'une matrice d'affichage DLM de type LED classique. Par souci de clarté, seul un groupe de quatre lignes (numérotées de 1 à 4) de quatre LEDs LD réparties en quatre colonnes (numérotées de a à d) est représenté. Dans chaque ligne 1 à 4, l'anode de chaque LED LD est connectée à une borne de conduction d'un transistor MOS M1 à canal N présentant une seconde borne de conduction recevant la tension d'alimentation VCC. Le transistor M1 de chaque ligne comprend une borne de grille connectée à une sortie respective d'un circuit de décodage de ligne RSL. Dans chaque colonne a à d, la cathode de chaque LED LD est connectée à une liaison de colonne connectée à un circuit de contrôle de colonne CCTL.

L'allumage d'une LED LD est effectué en commandant le transistor M1 de la ligne correspondante pour le rendre passant et en reliant à la masse la colonne correspondante. Ainsi, chaque LED forme une zone émettrice de lumière susceptible d'être allumée ou éteinte individuellement.

Pour afficher une ligne d'une image stockée dans la mémoire image MEM, la ligne d'image est chargée dans le circuit de contrôle de colonne CCTL, ce dernier maintenant les colonnes a-d dans l'état haute impédance. Le circuit de décodage RSL active la ligne à afficher. L'anode des LEDs de la ligne activée se trouve donc à la tension VCC. En fonction des données image de la ligne chargée, le circuit de contrôle CCTL applique à chaque colonne ad une basse tension ou bien la tension VCC selon que la LED à l'intersection de la ligne et de la colonne doit être allumée ou rester éteinte. Les liaisons de colonne des LEDs devant rester éteintes peuvent également être maintenues en haute impédance. Le circuit de contrôle CCTL applique à une colonne une tension nulle (potentiel de la masse) lorsque la LED correspondante doit émettre une intensité lumineuse maximum, pour que le courant la traversant soit maximum.

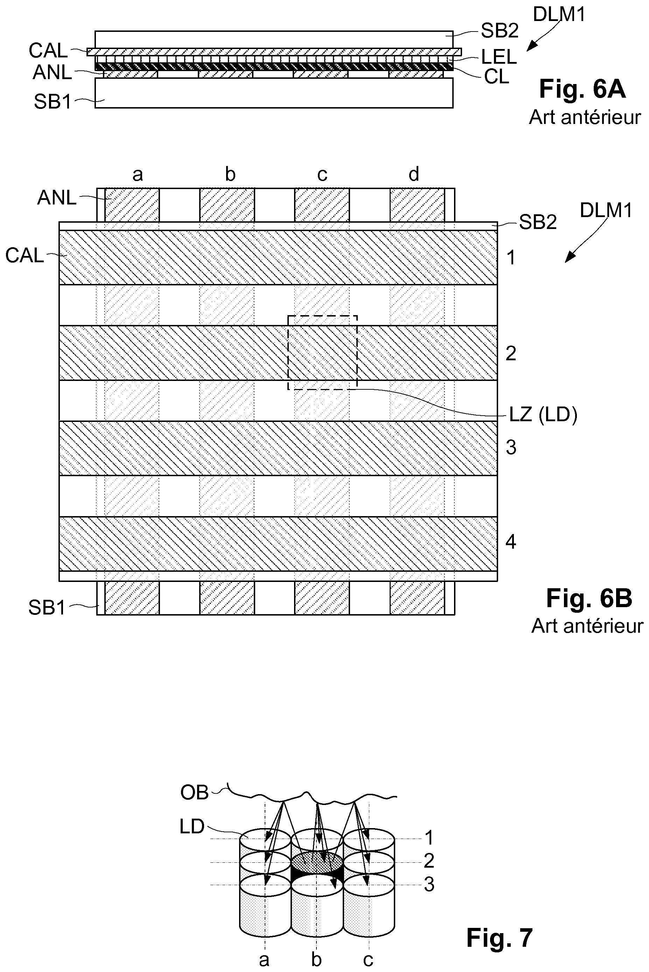

Les figures 6A, 6B représentent une matrice d'affichage DLM1 de type OLED. La matrice DLM1 présente une structure multicouche comprenant un substrat SB1 sur lequel sont formées des pistes conductrices parallèles ANL formant des lignes d'anodes de LEDs. Les pistes ANL sont recouvertes d'une couche conductrice CL, puis d'une couche émettrice de lumière LEL, ces deux couches étant à base de polymères ou de molécules organiques appropriées. La couche LEL est recouverte de pistes conductrices CAL parallèles et transparentes, formant des lignes de cathodes de LEDs, disposées perpendiculairement aux pistes d'anodes ANL. Chaque région où une piste ANL se trouve superposée à une piste CNL forme ainsi une LED ou zone d'émission de lumière LZ susceptible d'être allumée ou éteinte individuellement. La couche LEL est recouverte d'un écran protecteur transparent SB2.

Les matrices DLM, DLM1 des figures 5, 6A, 6B sont commandées ligne par ligne de sorte que toutes les LEDs d'une ligne sont commandées simultanément pour allumer ou non sélectivement chacune des LEDs de la ligne. Ainsi, une image est affichée ou rafraîchie progressivement ligne par ligne. Dans ce qui suit, le terme "ligne" désigne une rangée de LEDs ou zones émettrices de lumière qui sont sélectionnées simultanément, et le terme "colonne" désigne une rangée de LEDs appartenant à des lignes différentes et donc qui sont sélectionnées successivement lors de l'affichage d'une image par la matrice.

La figure 7 représente un groupe de neuf LEDs LD adjacentes de la matrice de pixels DLM ou DLM1, réparties sur trois lignes numérotées 1, 2, 3 et trois colonnes numérotées a, b, c. Dans l'exemple de la figure 7, seule la LED 2-b (sur la ligne 2 et la colonne b) émet de la lumière et les LEDs adjacentes à la LED 2-b sont éteintes. Si un objet OB est présent sur la surface de l'écran d'affichage, chacune des LEDs LD, y compris la LED 2-b allumée reçoit une partie de la lumière émise par la LED 2-b et réfléchie par la surface de l'objet OB en regard de l'écran d'affichage. Parmi les LEDs éteintes, il convient de distinguer
- celles qui sont connectées à la LED 2-b, c'est-à-dire les LEDs 2-a et 2-c situées sur la ligne 2 de la LED 2-b, et les LEDs 1-b et 3-b situées sur la colonne b de la LED 2-b,
- et les LEDs non connectées à la LED 2-b, c'est-à-dire celles situées sur les lignes 1 et 3 flottantes et les colonnes a et c qui sont également flottantes (sans quoi les LEDs 2-a, 2-c seraient allumées), c'est-à-dire les LEDs 1-a, 3-a, 1-c et 3-c.

La réflexion de la lumière vers les LEDs connectées 2-a à 2-c, 1-b et 3-b, incluant la LED allumée 2-b a pour effet de modifier la consommation électrique de la matrice DLM, DLM1 pendant que la LED 2-b est allumée. La réflexion de la lumière vers les LEDs non connectées 1-a, 1-c, 3-a, 3-c a pour effet d'accumuler des charges électriques dans ces lignes et colonnes, ces charges électriques seront déchargées lors de l'activation des lignes 1 et 3. Par ailleurs, il va de soi que plus l'objet est éloigné de la surface de l'écran d'affichage, moins il réfléchit de la lumière vers ce dernier. La quantité de lumière réfléchie vers l'écran d'affichage dépend également de la couleur de l'objet et des longueurs d'onde émises par les LEDs. Ainsi, plus l'objet est clair dans la plage de longueurs d'ondes considérée, plus il réfléchit de la lumière vers l'écran d'affichage.

Le processeur PRC est configuré pour exploiter les mesures de tension ou de courant consommé ou de signal électromagnétique émis par le dispositif d'affichage DD, afin de déterminer l'amplitude de la réflexion lumineuse sur chaque ligne de la matrice DLM lorsqu'un objet est présent à proximité au-dessus de l'écran d'affichage. Selon le procédé de l'invention, l'amplitude de la réflexion lumineuse peut être déterminée par comparaison avec des mesures de consommation obtenues en l'absence d'objet à proximité de l'écran d'affichage lorsqu'un motif prédéterminé est affiché par l'écran d'affichage. Les mesures obtenues en l'absence d'objet sont alors acquises et mémorisées par le processeur PRC lors d'une phase de calibration. La phase de calibration peut être exécutée à divers moments, et notamment juste avant une phase de détection ou de capture d'une image d'un objet présent sur l'écran d'affichage.

Selon un autre mode de réalisation, un convertisseur tension / fréquence est utilisé à la place du convertisseur ADC. Un traitement de FFT ("Fast Fourier Transform") peut être ensuite appliqué pour séparer les hautes et basses fréquences, afin d'obtenir une mesure de consommation de la matrice DLM, DLM1.

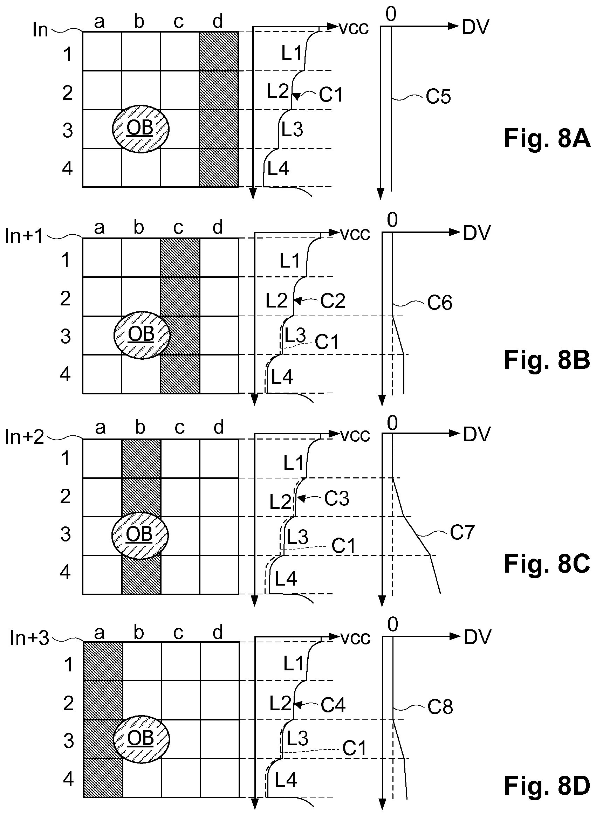

Le processeur PRC reçoit le signal de synchronisation image FR pour pouvoir déterminer à tout instant à quelle image et quelle ligne de l'image affichée correspond le signal de consommation numérisé qu'il reçoit du convertisseur ADC, les images étant affichées ligne par ligne. Le signal de consommation est ensuite analysé ligne à ligne, la consommation de chaque ligne lors de l'affichage d'une image étant comparée avec la consommation de la même ligne lors de l'affichage des images suivantes. Cela sera mieux compris en se référant aux figures 8A et 8D qui illustrent schématiquement un exemple de mise en œuvre du procédé dans lequel l'objet à détecter est fixe.

Les figures 8A, 8B, 8C et 8D représentent une série d'images de capture In, In+1, In+2, In+3, affichées durant l'acquisition de signaux de consommation, et des exemples de courbes C1, C2, C3, C4 de signaux de consommation obtenus en affichant la série d'images In à In+3. Chaque image In à In+3 présente ici un motif simple comportant une colonne de LEDs LD allumées, qui est décalé d'une colonne vers la gauche à chaque image suivante. Les courbes de signaux C1 à C4 sont présentées dans les figures8A à 8D en correspondance avec les images In à In+3. Par souci de clarté et de simplicité, seule une matrice de 4x4 LEDs LD comportant quatre lignes numérotées de 1 à 4 et quatre colonnes a, b, c, d est montrée sur les figures8A à 8D. Dans cet exemple une seule LED 3-b (c'est-à-dire de ligne 3 et de colonne b) est entièrement couverte par un objet OB, mais l'objet déborde sensiblement sur les LEDs 3-a, 3-c, 2-b et 4-b. L'objet est par exemple une partie d'une empreinte digitale.

Les images sont affichées ligne par ligne. Toutes les LEDs de la ligne affichée sont sélectionnées simultanément par un pilote de ligne qui applique à la ligne la tension VCC, tandis que la configuration des LEDs dans l'état électriquement alimenté, donc émetteur de lumière, ou non électriquement alimenté, se fait au moyen de pilotes de colonne qui sont sélectionnés simultanément. Les LEDs reliées à un pilote de colonne dans l'état haute impédance sont dans l'état non électriquement alimenté, tandis que les LEDs reliées à un pilote de colonne dans l'état conducteur (connexion de la colonne au potentiel de masse) sont dans l'état électriquement alimenté, donc émettrices de lumière.

Les courbes C1 à C4 montrent les variations de la tension d'alimentation VCC en fonction du temps, acquise par le processeur PRC dans l'appareil de la figure 1, lorsque la matrice d'affichage DLM est du type à LEDs comme celle représentée sur la figure 5. Les courbes C1 à C4 correspondent à une mesure de la tension VCC acquise durant l'affichage des images In à In+3, respectivement.

Chacune des courbes C1-C4 comprend quatre sections L1 à L4. La section L1 montre la valeur de la tension d'alimentation VCC lors de l'affichage de la ligne 1, la section L2 montre la valeur de la tension d'alimentation VCC lors de l'affichage de la ligne 2, la section L3 montre la valeur de la tension d'alimentation VCC lors de l'affichage de la ligne 3 et la section L4 montre la valeur de la tension d'alimentation VCC lors de l'affichage de la ligne 4.

Contrairement à l'enseignement du document précité « Applications of light emitting diodes as sensors of their own emitted light », l'acquisition de ces différentes valeurs de la tension VCC se fait sans imposer un courant fixe dans la matrice de pixels, le procédé ne s'intéressant qu'aux variations globales de la consommation électrique aux bornes de la matrice. De même, l'acquisition de l'information relative à la variation de consommation électrique peut être faite par une acquisition du courant consommé, sans imposer une tension VCC fixe, ou par acquisition d'un signal d'émission électromagnétique, sans imposer un courant fixe ou une tension VCC fixe.

On distinguera ici des variations « normales » de la tension VCC, et des variations « significatives » de la tension VCC dues à la présence de l'objet OB. Les variations normales sont celles qui sont dues à un effet capacitif dans la matrice d'affichage, qui a pour conséquence qu'à chaque activation d'une ligne suivante comprenant une LED allumée, la tension VCC n'a pas le temps de revenir à sa valeur initiale. Ce phénomène se constate pendant l'activation d'un certain nombre de lignes, avant que la tension VCC ne se stabilise (non représenté ici, le nombre de lignes représenté étant insuffisant pour obtenir cette stabilisation). Ce phénomène se constate sur la majorité des matrices de LEDs qui ne sont pas équipées d'un système de décharge des capacités parasites, permettant à la tension VCC de revenir à sa valeur initiale avant chaque activation d'une nouvelle ligne. L'exemple qui est donné ici sur les courbes C1 à C4 est donc basé sur des observations réelles faites sur une matrice de LEDs ne possédant pas de moyen de décharge de ses capacités parasites après chaque activation d'une ligne.

Les variations significatives de la tension VCC sont celles qui s'ajoutent aux variations normales et qui sont représentatives de la présence de l'objet OB. Le procédé de l'invention s'intéresse aux variations significatives et non aux variations normales. Par exemple, sur la figure 8B correspondant à l'affichage de l'image In+1, la section L3 de la courbe C2 correspondant à l'activation de la ligne 3 montre un écart de la tension VCC par rapport à la valeur qu'elle présente dans la section L2 de la courbe C2 correspondant à l'activation de la ligne 2. Cet écart est dû d'une part à une variation normale de la tension VCC et d'autre part à une variation significative. La variation normale est due au fait que l'on active une LED dans la ligne 3, ici la LED 3-c, après avoir activé une LED dans la ligne 2, à savoir la LED 2-c. La variation significative est due au fait que l'objet OB déborde sensiblement sur la LED 3-c, et réfléchit une partie de la lumière qu'elle émet, de sorte que la consommation de courant de la matrice s'en trouve très légèrement altérée. Ici, la consommation de courant est sensiblement moindre. Cela se traduit par une légère augmentation de la tension VCC par rapport à sa baisse normale qui devait être constatée, comme cela est montré sur la figure 8B par la reproduction en traits pointillés de la courbe C1, qui se trouve sensiblement en-dessous de la courbe C2 à partir de la section L3, soit lors de l'affichage de la ligne 3.

Il sera noté ici que l'effet de renvoi de lumière par l'objet OB sur la matrice d'affichage pourrait également, selon la structure de la matrice d'image et la technologie employée, se traduire par une baisse supplémentaire de la tension VCC et non une réduction de la baisse de la tension VCC comme montré ici. De façon générale le procédé de l'invention s'intéresse aux variations significatives, qu'elles soient positives ou négatives.

Les figures 8A-8D montrent également des courbes C5 à C8 montrant les variations significatives de la tension d'alimentation VCC à chaque balayage d'une ligne, pour chaque image affichée.

Lors de l'acquisition des mesures formant la courbe C1, la colonne d de LEDs LD est allumée progressivement de la ligne 1 à la ligne 4. La lumière émise par la colonne d n'est quasiment pas réfléchie vers l'écran d'affichage par l'objet OB en position 3-b. Il en résulte que les variations significatives de la tension VCC restent sensiblement nulles, la courbe C5 étant plate.

Lors de l'acquisition des mesures de la courbe C2, la colonne c comprenant les LEDs 1-c à 4-c est allumée. La lumière émise par la colonne c est légèrement réfléchie par l'objet OB vers l'écran d'affichage car l'objet déborde sensiblement sur la LED 3-c, comme indiqué ci-dessus. Il en résulte que la courbe C2 de la tension VCC présente un léger écart significatif par rapport à la courbe C1 lors de l'activation des lignes 3 et 4, ce qui correspond aux sections L3 et L4 de la courbe C2. Cette variation "significative se retrouve sur la courbe C6 qui croît pendant l'affichage de la ligne 3 et cette accroissement est conservé durant l'affichage de la ligne 4.

Lors de l'acquisition des mesures de la courbe C3, correspondant à l'affichage de l'image In+2, la colonne b comprenant les LEDs 1-b à 4-b est allumée séquentiellement par sélection successive des lignes 1 à 4. La lumière émise par la colonne b est réfléchie par l'objet OB vers l'écran d'affichage et en particulier vers les LEDs des lignes 2, 3 et 4 car l'objet se trouve au-dessus de la LED 3-b et déborde sensiblement sur les LEDs 2-b et 4-b. Il en résulte que la courbe C3 de la tension VCC, en raison du renvoi de lumière par l'objet OB, présente un écart encore plus important avec la courbe C1 (montrée en traits pointillés) lors de l'activation des lignes 2, 3 et 4. Il en résulte donc également que la courbe C7 des variations significatives de la tension VCC montre un écart croissant durant l'affichage de la ligne 2, un plus grand écart à la fin de l'affichage de la ligne 3, et un léger écart supplémentaire par rapport à l'écart précédent durant l'affichage de la ligne 4.

Enfin, lors de l'acquisition des mesures de la courbe C4, la colonne a des LEDs 1-a à 4-a est allumée. La lumière émise par la colonne a est légèrement réfléchie par l'objet OB vers l'écran d'affichage car l'objet déborde sensiblement sur la LED 3-a. Par ailleurs, les lignes 3 et 4 ont reçu des charges électriques lors de l'affichage de la ligne 3, en particulier de la LED 3b. Les lignes 3 et 4 reçoivent donc moins d'énergie de la source d'alimentation à la tension VCC. Il en résulte sur la courbe C8 un léger écart entre le signal représenté par la courbe C4 et le signal représenté par la courbe C1 durant l'affichage des lignes 3 et 4. La comparaison des écarts de signaux appartement à la même section L1 à L4 entre les courbes C1 à C4, tels qu'illustrés par les courbes C5 à C8, permettent de déduire que l'objet OB se trouve sur la LED 3b, car une très forte variation de consommation électrique est constatée lorsque cette LED est allumée. De même, la variation de consommation constatée sur la section L3 de la courbe C2 permet de savoir que l'objet OB déborde sensiblement sur la LED 2-c, les variations constatées sur les sections L2 et L4 de la courbe C3 permettent de savoir que l'objet déborde sensiblement sur les LEDs 2-b et 4-b, et la variation constatée sur la section L3 de la courbe C4 permet de savoir que l'objet déborde sensiblement sur la LED 3-a.

Le procédé de l'invention, pour être mis en œuvre, implique donc que les variations de la tension VCC globale aux bornes de la matrice d'affichage soient analysées pour des lignes de même rang de chaque image affichée, ici une simple rangée de LEDs déplacée de colonne en colonne. Dans l'exemple simplifié qui précède, les sections L1 (activation de la ligne 1) des courbes C1 à C4 sont donc comparées entre elle, les sections L2 (activation de la ligne 2) de ces courbes sont comparées entre elles, les sections L3 (activation de la ligne 3) de ces courbes sont comparées entre elles, et les sections L4 (activation de la ligne 4) de ces courbes sont comparées entre elles. Il en résulte que dans le cas où un convertisseur de tension ADC est utilisé comme montré sur la figure 1, la fréquence d'échantillonnage doit être au moins égale à la fréquence de sélection des lignes mais de préférence supérieure voire très supérieure à celle-ci, sans quoi il serait difficile de distinguer les variations de consommation de la matrice d'affichage à chaque activation d'une ligne de même rang d'une image et des images suivantes.

En pratique, pour l'acquisition de chaque mesure de consommation électrique permettant d'acquérir chaque section L1 à L4 des courbes de consommation électrique C1 à C4 (avec un pas d'échantillonnage pouvant être plus ou moins fin), chacune des images In à In+3 est de préférence affichée plusieurs fois à l'écran, de préférence au moins deux fois, avant d'afficher l'image suivante. L'acquisition de chaque mesure de consommation électrique pour un affichage d'une ligne de LEDs de la même image, et pour chaque affichage de l'image, est elle-même répétée plusieurs fois, ce nombre de fois étant fonction de la fréquence d'échantillonnage. On obtient donc des séries de valeurs de consommation électrique.

Par exemple, lors de l'affichage de la première image (figure 8A), lors de la sélection de la première ligne (section L1) la tension VCC est mesurée plusieurs fois, ce qui permet d'acquérir une série de valeurs VL11, VL12, VL13,.... De même, lors de la sélection de la ligne 2 (section L2) on acquiert une deuxième série de valeurs VL21, VL22, VL23..., et ainsi de suite pour chaque ligne suivante de la même image. La même image est ensuite rafraîchie (soit affichée de nouveau) et la même mesure est répétée pour chaque sélection des lignes 1 à 4 pour l'obtention de nouvelles séries de valeurs, par exemple VL11', VL12', VL13'...., VL21', VL22', VL23'..., et ainsi de suite à chaque nouvel affichage de la même image, avant de passer à l'affichage de l'image suivante de la figure 8B, etc. Ces séries de valeurs de la tension VCC font ensuite l'objet d'un traitement par analyse statistique ou corrélation, ou par intelligence artificielle, afin d'éliminer diverses formes de bruit dans la mesure et déterminer la valeur de consommation électrique la plus probable. On obtient ainsi, pour chaque ligne de chaque image affichée plusieurs fois, une série temporelle de référence, par exemple VL11ref, VL12ref, VL13ref..., VL21ref, VL22ref, VL23ref..., pour chaque section L1, L2,... de la courbe C1, C2, C3 ou C4.

Après ce pré-traitement (s'il est nécessaire en fonction du niveau de bruit) ces suites temporelles de référence font l'objet d'un nouveau traitement, par analyse statistique ou corrélation, ou par intelligence artificielle, pour obtenir le signal image de l'objet. Ce traitement est basé sur une analyse des variations de la tension d'alimentation d'une image à l'image suivante.

Dans un mode de réalisation, l'étape d'acquisition de séries temporelles de référence n'est pas réalisée explicitement et l'on procède directement, par analyse statistique, corrélation ou intelligence artificielle, à un traitement global des séries de valeurs échantillonnées VL11, VL12, VL13,...., VL11', VL12', VL13'..., VL21, VL22, VL23,...., VL21', VL22', VL23'..., permettant de déduire les variations de la tension d'alimentation d'une image à l'autre et d'obtenir le signal image de l'objet,.

Dans un mode de réalisation, on construit un modèle d'intelligence artificielle en se basant sur l'analyse de plusieurs images dans des conditions déterminées (apprentissage). Ce modèle permet ensuite d'analyser des variations de la tension d'alimentation lors de la capture ultérieure d'une ou de plusieurs images.

Comme cela a été indiqué plus haut, le procédé de l'invention est une application à un écran d'affichage de méthodes utilisées dans le domaine de l'analyse par canaux auxiliaires, permettant de déterminer la valeur d'une clé de cryptographie à partir de l'acquisition de plusieurs valeurs de consommation électrique d'un circuit intégré. Les méthodes classiques d'analyse statistique, de corrélation ou d'intelligence artificielle mises au point ces dernières années pour conduire des analyses par canaux auxiliaires sont utilisées ici, non pas pour déterminer la valeur d'une clé de cryptographie en fonction de son influence sur la consommation électrique d'un circuit intégré, mais pour construire le signal image de l'objet en fonction de son influence sur la consommation électrique d'un écran d'affichage à LEDs.

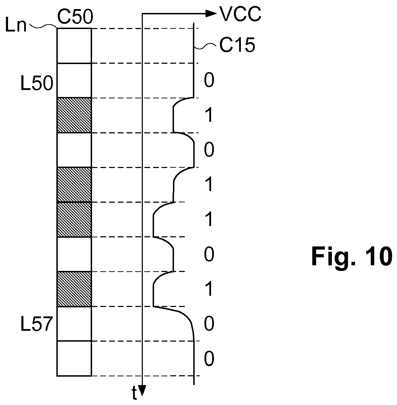

Cette analyse des variations de consommation électrique par le processeur PRC nécessite que ce dernier reçoive le signal de synchronisation FR indiquant l'instant de début de l'affichage de chaque image. Par analogie, les méthodes d'analyse par canaux auxiliaires nécessitent également de connaître l'instant où une opération de calcul cryptographique est engagée, sans quoi l'analyse des variations de la consommation d'un circuit intégré ne peut permettre d'attribuer ces variations à une hypothèse quant à la valeur de chaque bit de la clé secrète devant être découverte. Toutefois, dans le cadre de la présente invention, d'autres méthodes de synchronisation sont possibles et en particulier une méthode décrite plus loin en relation avec la figure 10.

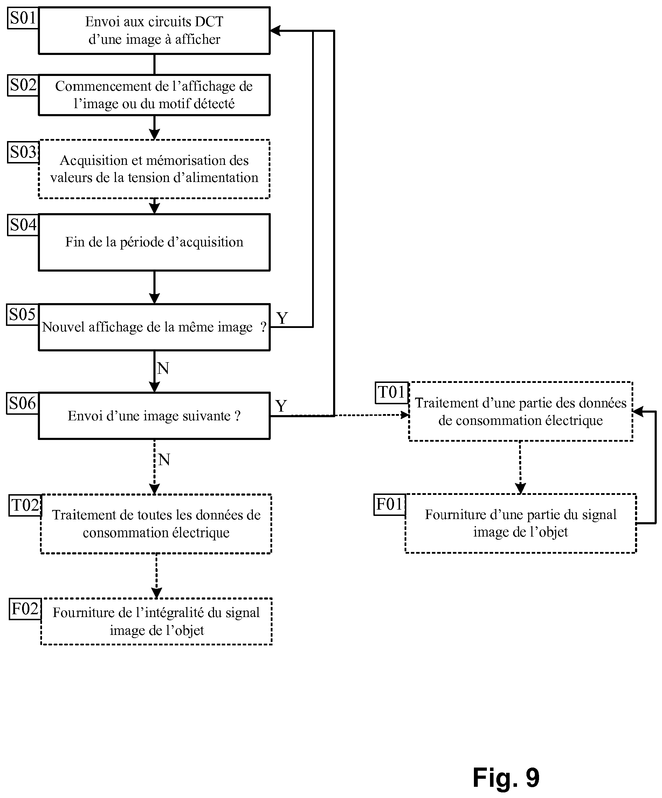

La figure 9 est un organigramme résumant ce qui vient d'être indiqué et montrant un mode de réalisation du procédé de l'invention. Le processeur exécute un programme dans lequel ont été prédéfinis les paramètres de base du procédé, à savoir le nombre d'images à afficher, le motif attribué à chaque image, et le nombre de fois où chaque image doit être affichée. Par exemple, il faut quatre images pour afficher les quatre motifs représentés sur les figures8A à 8D, permettant d'effectuer un balayage complet de l'objet. Toutefois le procédé peut aussi ne comprendre que l'affichage du même motif, comme cela sera vu par la suite, lorsque l'objet se déplace à la surface de l'écran d'affichage ou lorsqu'une acquisition de référence a été préalablement réalisée.

Au cours d'une étape S01, le processeur PRC envoie la première image aux circuits de contrôle DCT de l'écran d'affichage. Au cours d'une étape S02, le processeur PRC détecte le commencement de l'affichage de l'image, soit la sélection et l'activation de la première ligne de l'image par les circuits DCT, au moyen du signal de synchronisation FR. Alternativement, le processeur détecte le commencement de l'affichage du motif par détection d'un code de synchronisation intégré dans l'image, tel que celui décrit plus loin en relation avec la figure 10. Cette dernière méthode évite de faire l'acquisition de valeurs de tension qui ne sont pas utiles pour générer le signal image de l'objet car celui-ci se trouve uniquement dans la zone d'affichage du motif (l'utilisateur étant supposé poser l'objet dans cette zone).

Au cours d'une étape S03, le processeur PRC réalise l'acquisition d'une pluralité de valeurs de la tension d'alimentation VCC de l'écran d'affichage pendant l'affichage d'une pluralité de lignes de l'image (4 lignes dans l'exemple des figures 8A à 8D), et mémorise ces données.

Au cours d'une étape S04, le processeur PRC détermine la fin de la période d'acquisition. Il peut s'agir de la fin de l'affichage du motif attribué à l'image déterminé, qui peut être connue par un comptage des lignes sélectionnées successivement, ou d'un comptage du temps nécessaire à l'affichage de ce motif. En effet, il n'est pas nécessaire que le processeur poursuive l'acquisition de valeurs de la tension d'alimentation de l'écran d'affichage au-delà de l'affichage du motif.

Au cours d'une étape S05, le processeur PRC détermine s'il doit afficher la même image une nouvelle fois. Si la réponse est positive, le processeur retourne à l'étape S01 pour envoyer une nouvelle fois l'image aux circuits de contrôle DCT, puis réitère les étapes S02, S03, S04, S05 pour l'acquisition et la mémorisation d'un nouvel ensemble de valeurs de la tension d'alimentation VCC de l'écran d'affichage. Si la réponse est négative, c'est-à-dire si le processeur a déjà affiché cette image N fois, le processeur exécute une étape S06 où il détermine s'il faut envoyer une nouvelle image aux circuits de contrôle DCT. Si la réponse est positive, le processeur retourne à l'étape S01 pour envoyer la nouvelle image aux circuits de contrôle DCT puis réitère les étapes S02, S03, S04, S05, S06 pour acquérir et mémoriser à chaque étape S03 un nouvel ensemble de valeurs de la tension d'alimentation de l'écran d'affichage.

Il convient ensuite de traiter par analyse statistique, corrélation ou intelligence artificielle, cette grande quantité de données, pour obtenir le signal image de l'objet. Ce traitement peut être fait en temps réel ou en différé. Le traitement en temps réel peut être fait à chacune nouvel affichage de la même image. Le traitement en temps réel peut aussi être fait après avoir terminé les N cycles d'affichage de la même image, au cours d'une étape T01 qui est exécutée lorsque le processeur, à l'étape S06, constate qu'une image a été envoyée N fois et qu'une image suivante doit être affichée. Ainsi, au cours de l'étape T01, le processeur PRC traite les données de consommation électrique collectées pour chaque ligne de l'image qui vient d'être affichée de multiples fois, par analyse statistique, corrélation ou intelligence artificielle. Ce traitement est toutefois de préférence réduit aux lignes d'affichage du motif, pour éviter des calculs inutiles. Ensuite, au cours d'une étape F01, le processeur PRC fournit une partie du signal image de l'objet en relation avec l'image qui vient d'être affichée de multiples fois. Les étapes T01 et F01 sont répétées après les N affichages de l'image suivante et ainsi de suite, jusqu'à ce que l'intégralité du signal image soit fourni.

Le traitement des données en différé peut être fait au cours d'une étape T02 qui suit l'étape S06, lorsque le processeur sait qu'il n'y a plus de nouvelle image à envoyer aux circuits de contrôle DCT. Dans cas, le traitement concerne les données de consommation électrique collectées pour chaque ligne de chaque image affichée de multiples fois (mais de préférence seulement les lignes correspondant à l'affichage des motifs des images), pour chacune des images ayant été affichées, et est comme précédemment conduit par analyse statistique, corrélation ou intelligence artificielle. Au cours d'une étape F02, le processeur PRC fournit en différé le signal image de l'objet en relation avec toutes les images ayant été affichées de multiples fois. Il va de soi que le traitement en temps réel ou en différé peut aussi être réalisé par un autre processeur, qui reçoit les données de consommation électrique collectées par le processeur PRC, par exemple un module d'intelligence artificielle ou un coprocesseur arithmétique conçu pour exécuter ce type de calcul.

Le procédé selon l'invention peut aussi être mis en œuvre par une mesure de la consommation électrique de la matrice d'affichage selon le mode de réalisation des figures 2 ou 3 d'un dispositif selon l'invention. Dans ce cas, les signaux en courant à comparer ont la forme de pics de courant, au lieu d'avoir la forme de courbes de la tension VCC. De tels pics de courant apparaissent lors de la commutation des lignes de LEDs avant leur affichage, l'amplitude de ces pics dépendant des charges électriques précédemment accumulées, et donc de la lumière captée par les LEDs de ces lignes. Ces variations d'amplitude des pics de courant sont comparées pour obtenir des courbes de variation d'amplitude qui sont similaires, ou à tout le moins corrélées, aux courbes C5 à C8 de variations de la tension VCC, car elles sont dues au même phénomène. De même, en utilisant le mode de réalisation de la figure 4, le signal d'émission électromagnétique observé à chaque activation d'une ligne et chaque affichage d'une image présente des courbes de variation similaires ou corrélées aux courbes C5 à C8. Il est également envisageable de combiner plusieurs de ces différents types de mesure, tout en conservant une fréquence d'échantillonnage de la consommation électrique et d'analyse des variations de la consommation électrique au moins égale mais de préférence supérieure voire très supérieure à la fréquence de balayage des lignes.

Par ailleurs, bien que l'objet montré schématiquement sur les figures 8A et 8D soit un objet simple ne comprenant qu'un unique contour, en pratique l'objet dont le signal image devra être construit conformément au procédé de l'invention sera un objet complexe comprenant de multiples parties constitutives, par exemple un profil d'empreinte digitale. Chaque partie de l'objet complexe, par exemple chaque relief d'une empreinte digitale, sera alors assimilable à un objet simple. Ainsi la notion d' « objet » n'est pas limitée à un objet simple et s'entend comme couvrant également une multiplicité d'objets simples.

De même, le motif affiché par chaque image pour la mise en œuvre du procédé peut être simple ou complexe, et adapté au type d'objet à imager. Il comprend au minimum une rangée de LEDs appartenant à la même colonne, à savoir des LEDs qui appartiennent à des lignes différentes et qui sont sélectionnées séquentiellement et successivement.

L'homme de l'art comprendra que, dans une matrice de LEDs commandées ligne par ligne, un motif qui serait constitué d'une rangée de LEDs appartenant à la même ligne ne devrait pas, en principe, permettre de mettre en œuvre le procédé, car toutes ces LEDs seraient allumées en même temps, de sorte qu'il ne serait pas possible de déterminer à quelle LED ou groupe de LEDs allumées un écart de signal de consommation est dû. Par exemple, sur les figures 8A à 8D, si toutes les LEDs d'une ligne étaient allumées simultanément, les signaux de consommation acquis ne permettraient pas de distinguer la contribution individuelle de chaque LED allumée de la ligne. Toutefois, dans une matrice de plus grande dimension, si ce motif était décalé de gauche à droite et de droite à gauche sur la ligne, il serait quand même possible de détecter l'instant où le motif atteint l'objet à détecter et l'instant où le motif dépasse l'objet à détecter, de sorte que l'objet pourrait également être détecté, mais d'une manière moins optimale. Il conviendrait alors d'effectuer un balayage similaire sur toutes les lignes voisines, pour cerner les limites de l'objet.

Par ailleurs, le procédé de l'invention peut être mis en œuvre dans une matrice d'affichage dont les LEDs sont commandées individuellement. Dans ce cas, le motif peut être choisi quelconque, par exemple formée par une rangée de LEDs d'une même ligne ou d'une même colonne activées séquentiellement.

Dans le cas d'un écran présentant une très haute résolution par rapport à l'objet devant être détecté, il peut être envisagé d'activer en même temps plusieurs LEDs d'une même ligne, voire plusieurs LEDs couvrant une même ligne et couvrant plusieurs colonnes, considérées comme formant ensemble une « macro-LED » de plus grande surface, ce qui conduit à une réduction de la résolution du signal image obtenu. Dans une variante du procédé, on utilise dans un premier temps des « macro-LEDs » de grande taille pour localiser rapidement l'objet, puis on affine la détection de l'objet dans la zone identifiée en augmentant progressivement la finesse de résolution ou en passant directement à la résolution maximale à l'échelle des LEDs.

Selon d'autres modes de réalisation, le motif présenté dans la série d'images affichées durant l'acquisition des mesures de consommation est décalé d'une colonne toutes les k images de la série d'images, k étant supérieur ou égal à 1. Le sens de décalage peut être indifféremment effectué vers la gauche ou vers la droite, ou en alternance vers la gauche et vers la droite. Le motif affiché peut comporter plusieurs colonnes allumées adjacentes, notamment lorsqu'on souhaite augmenter la sensibilité de la détection et que la résolution de l'écran d'affichage est supérieure à la résolution de la détection souhaitée. Le motif peut être formé de carrés ou de rectangles de plusieurs LEDs, les carrés ou rectangles étant de préférence espacés les uns des autres de manière à ne pas couvrir une même ligne de l'écran d'affichage.

Dans le cas d'une matrice d'affichage en couleur, chaque pixel d'une image affichée par une telle matrice peut être formé de plusieurs LEDs de différentes couleurs primaires. Lorsque le motif affiché est dans une couleur primaire, seule une LED de la couleur primaire de chaque pixel d'une rangée de pixels de la matrice peut être activée. Dans ce cas, le terme "deux LEDs adjacentes" désigne deux LEDs adjacentes de la même couleur primaire, étant entendu que des LEDs présentant d'autres couleurs primaires peuvent être disposées entre les deux LEDs adjacentes de la même couleur primaire.

Grâce aux mesures de consommation du dispositif d'affichage, la présence et la position d'un objet sur l'écran d'affichage peuvent être déterminées. Lorsque l'objet couvre plusieurs pixels de l'écran d'affichage, ces mesures permettent de déterminer la forme et le relief de l'objet. En analysant plus finement les signaux de consommation acquis, et en comparant à un seuil des écarts de consommation avec et sans objet présent sur l'écran d'affichage, une image en noir et blanc de l'objet peut être formée à une résolution correspondant à la largeur d'une zone émettrice de LED, suivant la direction des lignes de l'écran d'affichage, et correspondant à la largeur du motif affiché, balayant l'écran d'affichage, suivant la direction des lignes de l'écran d'affichage. Ainsi, une page de texte imprimé placée contre l'écran peut être scannée, sachant que les caractères imprimés en noir ne réfléchissent pas ou très peu de lumière. De même, l'empreinte digitale d'un doigt placé sur l'écran peut être scannée, sachant que les sillons de l'empreinte digitale sont plus éloignés de l'écran que les bosses ou inclinés par rapport à l'écran, et réfléchissent donc moins de lumière. En outre, la largeur d'un sillon ou d'une bosse d'empreinte digitale est de l'ordre de 500 µm et la résolution des écrans actuels est couramment inférieure à 250 µm, les écrans d'affichage les plus récents pouvant atteindre une résolution de 45 µm. Par ailleurs, une quantification de l'amplitude des écarts de consommation mesurés peut permettre de déterminer plusieurs niveaux d'écarts de consommation, et ainsi former une image en niveaux de gris. Les signaux de consommation acquis lorsqu'un objet est présent à la surface de l'écran d'affichage peuvent être directement comparés entre eux en tenant compte des LEDs actives aux instants d'acquisition des signaux, pour déterminer une image de l'objet ou du relief de ce dernier.

Selon un mode de réalisation, le dispositif d'affichage est configuré pour afficher des images en couleurs. Dans ce cas, les images de capture affichées durant l'acquisition de signaux de consommation peuvent présenter un motif de LEDs allumées d'une certaine couleur. La couleur pour le motif de LEDs LD allumées peut être choisie de manière à offrir une meilleure sensibilité pour la détection et la production d'une image de l'objet OB présent à la surface de l'écran d'affichage. La couleur du motif affiché peut également être choisie en fonction de l'objet à détecter. Ainsi, la couleur jaune, et dans une moindre mesure, la couleur rouge, permettent de maximiser la réflexion de la lumière émise par l'écran d'affichage pour détecter une empreinte digitale.

En affichant plusieurs séries d'images avec des motifs de différentes couleurs, par exemple des couleurs primaires, il est possible de former une image de l'objet dans chaque couleur primaire, ces images pouvant ensuite être combinées pour former ensuite une image en couleur de l'objet.

Dans un mode de réalisation, la zone de capture de l'écran d'affichage est réduite à un ensemble de lignes adjacentes de LEDs. Dans ce cas, le processeur PRC est configuré pour extraire des signaux de consommation acquis, la partie des signaux correspondant à la zone de capture, ou pour ne capturer que les signaux correspondant à la zone de capture.

Dans un autre mode de réalisation, le traitement des signaux de consommation est effectué par le processeur PRC à l'aide d'un module d'intelligence artificielle configuré par apprentissage en utilisant un grand nombre de signaux de consommation acquis dans différentes conditions de séries d'images affichées, en l'absence d'un objet à la surface de l'écran d'affichage et en présence d'un tel objet en différentes positions sur l'écran d'affichage. Les signaux de consommation utilisés pour l'apprentissage du module d'intelligence artificielle peuvent également être acquis dans différentes situations d'éclairage ambiant de l'écran d'affichage.

Dans un autre mode de réalisation, un signal de synchronisation permettant à tout instant de déterminer la position des LEDs allumées, est généré en affichant une image présentant un motif prédéfini, réparti sur une ou plusieurs colonnes prédéfinies. L'analyse du signal de consommation par le processeur PRC vise à retrouver le motif prédéfini. Connaissant la position du motif dans l'image, le processeur PRC peut alors déterminer le début de chaque image de la série d'images présentant le motif prédéfini, sans avoir besoin du signal de synchronisation FR précédemment décrit. Cette disposition peut être mise en œuvre lorsque le signal FR n'est pas fourni par les circuits de contrôle DCT du dispositif d'affichage.

La figure 10 représente un exemple de motif affiché pour permettre au processeur PRC de synchroniser les signaux de consommation reçus avec les images affichées. Dans cet exemple, l'image affichée est une image dans laquelle toutes les LEDs LD sont éteintes sauf les LEDs situées sur une colonne C50 de l'image et sur des lignes L51, L53, L54 et L56. La figure 10 montre également une courbe C15 de variation du signal de consommation du dispositif d'affichage lors de l'affichage des lignes L50 à L58, ce signal étant un signal de variation de la tension d'alimentation VCC en fonction du temps, acquis par le processeur PRC dans l'appareil de la figure 1. L'analyse du signal de consommation vise à détecter la séquence binaire 010110100, 0 et 1 correspondant à une LED éteinte et allumée, respectivement. Lorsque le processeur PRC détecte cette séquence binaire dans le signal de consommation, la LED 57 de la colonne C50 de l'image en cours d'affichage vient d'être affichée. Connaissant le temps d'affichage d'une ligne d'image, le processeur PRC peut ainsi déterminer l'instant de début d'affichage de la première ligne de chaque image ou bien localiser une zone à scanner.

Il apparaîtra clairement à l'homme de l'art que la présente invention est susceptible de diverses autres variantes de réalisation et applications. En particulier, la matrice de LEDs peut n'avoir qu'une seule ligne. Il est en effet possible d'utiliser une seule rangée de LEDs par exemple pour scanner un code optique à barres imprimé en noir et blanc. Il est également possible de générer une image d'un objet par exemple à l'aide d'une barrette de LEDs commandée par groupe d'au moins une LED de manière à activer successivement au moins une partie des LEDs de la barrette, la barrette étant déplacée par rapport à l'objet. Ainsi, les signaux de consommation acquis incluent des composantes résultant de la lumière réfléchie par l'objet et captée par les LEDs éteintes de la barrette, ainsi que les pistes conductrices reliées aux LEDs de la barrette. Par conséquent, les signaux de consommation issus d'une telle barrette de LEDs peuvent être équivalents à ceux fournis par l'écran d'affichage décrit précédemment.

L'invention n'est pas non plus limitée à l'affichage d'une série d'images différentes, c'est-à-dire ayant des motifs différents. Dans un mode de réalisation, le motif affiché sur l'écran d'affichage est fixe, tandis que l'objet est déplacé devant le motif, étant entendu que toutes les LEDs formant le motif peuvent ne pas être allumées en même temps, mais peuvent être allumées successivement pour augmenter la résolution de l'image obtenue de l'objet, en tenant compte notamment de la lumière réfléchie par l'objet et captée par les LEDs éteintes et les pistes conductrices reliées à ces LEDs. On obtient ainsi à chaque nouvelle image ou toutes les « N » images affichées, des variations significatives de signaux de tension VCC, de courant ou de signal électromagnétique, liées au déplacement de l'objet par rapport au motif affiché.

Il n'est pas non plus nécessaire que le motif soit décalé d'une ou plusieurs colonnes à chaque image de la série d'images. Il importe simplement que les positions respectives des LEDs allumées dans chaque image de la série d'image soient connues.

Dans un mode de réalisation, les acquisitions des signaux de consommation pour chaque sélection d'une ligne sont simplement comparées à des mesures de référence préalablement mémorisées, notamment dans le cadre d'une authentification par empreinte digitale. Les mesures de référence peuvent être obtenues en plaçant un doigt d'un utilisateur authentique dans le faisceau lumineux en différentes positions sur l'écran d'affichage ou en balayant le doigt avec le faisceau lumineux dans différentes directions. Il en résulte également que les mesures de signal de consommation électrique constituent en soi un signal image qui peut être traité pour constituer une image proprement dite.

Une matrice de LEDs utilisée pour la mise en œuvre du procédé de l'invention n'est pas nécessairement gérée de manière à afficher des images ligne par ligne, tous les pixels d'une ligne étant affichés simultanément. Ce mode de gestion dépend de l'architecture de la matrice d'affichage. Il va donc de soi que d'autres modes de gestion peuvent être envisagés. Ainsi, certaines matrices d'affichage peuvent être commandées pixel par pixel. Dans ce cas, il est possible de déterminer la contribution de chaque zone émettrice de la matrice dans chaque mesure de consommation.

## Revendications

1. Procédé de génération d'un signal image d'un objet (OB) au moyen d'un dispositif d'affichage comportant un écran d'affichage (SB2) comprenant des diodes électroluminescentes LEDs (LD) disposées en lignes et en colonnes, le procédé comprenant des étapes consistant à :
au moyen de l'écran d'affichage, afficher (S01, S05, S06) une série d'images (In-In+3) représentant chacune un motif respectif, l'affichage de chaque motif causant l'activation d'au moins une LED (LD) du dispositif d'affichage (DD) et entraînant l'émission d'un faisceau lumineux pouvant être identique ou différent du faisceau lumineux précédent selon que le motif affiché est identique ou différent du motif de l'image précédente,
acquérir (S03) une pluralité de mesures (L1-L4, C1-C4) de la consommation électrique du dispositif d'affichage au cours de l'affichage de chaque image (In-In+3),
acquérir (T01, T02) une pluralité de mesures (C5-C8) des variations de la consommation électrique du dispositif d'affichage, chaque mesure d'une variation de la consommation électrique étant représentative d'un écart entre une mesure de la consommation électrique du dispositif d'affichage pendant l'affichage d'une image et une mesure de la consommation électrique du dispositif d'affichage pendant l'affichage d'une image précédente de la série d'images (In-In+3),
dans lequel les mesures de la consommation électrique du dispositif d'affichage sont synchronisées avec la sélection successive de LEDs pendant l'affichage de chaque image de la série d'images (In-In+3),
et dans lequel la tension d'alimentation présente des variations représentatives de la présence de l'objet (OB), qui s'ajoutent à des variations normales de la consommation électrique et sont représentatives du signal image de l'objet,
le procédé comprenant une étape de traitement (T01, T02) des mesures des variations de la consommation électrique du dispositif d'affichage, par analyse statistique, corrélation ou intelligence artificielle, pour obtenir le signal image de l'objet.

2. Procédé selon la revendication 1, dans laquelle l'acquisition de chaque mesure (L1-L4, C1-C4) de consommation électrique du dispositif d'affichage au cours de l'affichage d'une image (In-In+3) comprend l'acquisition (S03) d'une pluralité de mesures (L1-L4, C1-C4) de consommation électrique en affichant la même image plusieurs fois (S01, S05), et l'acquisition (T01, T02) de la pluralité de mesures (C5-C8) des variations de la consommation électrique est faite par calcul mathématique ou intelligence artificielle sur la base de la pluralité de mesures de consommation électrique obtenue pour chaque image affichée plusieurs fois .

3. Procédé selon l'une des revendications 1 et 2, dans lequel chaque image de la série d'images (In-In+3) représente le même motif, ou, de façon équivalente, la série d'image ne comprend qu'une image, le faisceau lumineux étant invariant, comprenant l'étape consistant à balayer la surface de l'objet (OB) en déplaçant l'objet par rapport au faisceau lumineux.

4. Procédé selon la revendication 3, dans lequel l'affichage de chaque image comprend la sélection successive de groupes de LEDs (1-d, 2-d, 3-d, 4-d ; 1-c, 2-c, 3-c, 4-c ; 1-b, 2-b, 3-b, 4-b ; 1-a, 2-a, 3-a, 4-a) comprenant chacun au moins une LED, et dans lequel la mesure des variations de la consommation électrique du dispositif est obtenue en comparant sa consommation électrique lors de la sélection d'un groupe de LEDs pour une première position de l'objet, avec sa consommation électrique lors de la sélection du même groupe de LEDs pour des positions ultérieures de l'objet en déplacement, et ce pour chaque groupe de LEDs sélectionné lors de l'affichage d'une image.

5. Procédé selon l'une des revendications 1 et 2, dans lequel chaque image de la série d'images (In-In+3) représente un motif différent, , pour faire varier le faisceau lumineux, l'objet étant fixe par rapport au dispositif d'affichage.

6. Procédé selon la revendication 5, dans lequel l'affichage de chaque image et d'un motif attribué à l'image comprend la sélection successive de groupes de LEDs (1-d, 2-d, 3-d, 4-d ; 1-c, 2-c, 3-c, 4-c ; 1-b, 2-b, 3-b, 4-b ; 1-a, 2-a, 3-a, 4-a) comprenant chacun au moins une LED, et dans lequel la mesure des variations de la consommation électrique du dispositif est obtenue en comparant sa consommation électrique lors de la sélection de chaque groupe de LEDs pendant l'affichage d'une image, avec sa consommation électrique lors de la sélection d'un autre groupe de LEDs pendant l'affichage d'une image précédente, et ainsi de suite pour chaque image suivante, les groupes de LEDs sélectionnés pour lesquels les variations de la consommation électrique du dispositif sont mesurées d'une image à l'autre étant des groupes de même rang selon un ordre prédéterminé de sélection des LEDs lors de l'affichage de chaque image.

7. Procédé selon l'une des revendications 1 et 2, dans lequel la série d'images (In-In+3) représente le même motif, ou, de façon équivalente, la série d'image ne comprend qu'une image, la génération du signal image de l'objet comprend des étapes consistant à déterminer des écarts de consommation électrique en retranchant de chaque mesure de consommation électrique une mesure de référence respective acquise en l'absence d'objet dans le faisceau lumineux, et la mesure des variations de la consommation électrique du dispositif est obtenue en comparant sa consommation électrique lors de la sélection d'un groupe de LEDs en présence de l'objet, avec sa consommation électrique lors de la sélection du même groupe de LEDs en l'absence de l'objet.

8. Procédé selon l'une des revendications 1 à 7, dans lequel l'objet est un profil d'empreinte digitale.

9. Procédé selon l'une des revendications 1 et 2, dans lequel l'objet est une empreinte digitale et l'affichage de chaque image et d'un motif attribué à l'image comprend la sélection successive de groupes de LEDs (1-d, 2-d, 3-d, 4-d ; 1-c, 2-c, 3-c, 4-c ; 1-b, 2-b, 3-b, 4-b ; 1-a, 2-a, 3-a, 4-a) comprenant chacun au moins une LED, et dans lequel chaque image de la série d'images (In-In+3) représente le même motif, ou, de façon équivalente, la série d'image ne comprend qu'une image, le procédé comprenant une étape de mémorisation de la consommation électrique de l'écran d'affichage lors de l'activation de chaque groupe de LEDs en présence de l'empreinte digitale d'un utilisateur authentique, puis une étape de comparaison avec la consommation électrique mémorisée de la consommation électrique de l'écran d'affichage lors de l'activation de chaque groupe de LEDs en présence d'une empreinte digitale à authentifier .

10. Procédé selon l'une des revendications 1 à 9, dans lequel les mesures de signaux représentatifs de variations de la consommation électrique du dispositif d'affichage sont acquises selon l'une ou l'autre des méthodes suivantes ou une combinaison de celles-ci :
en mesurant une tension électrique (VCC) d'alimentation du dispositif d'affichage (DD),
en mesurant une intensité d'un courant d'alimentation (Icc) du dispositif d'affichage,
en mesurant une intensité d'un courant (Iss) transitant par une liaison à la masse du dispositif d'affichage,
en mesurant un rayonnement électromagnétique émis par le dispositif d'affichage (DD) ou l'écran d'affichage (DLM, DLM1).

11. Procédé selon l'une des revendications 1 à 10, dans lequel les images (In-In+3) de la série d'images sont affichées ligne par ligne de LEDs, les LEDs d'une ligne étant activées simultanément pour afficher une ligne d'images, le procédé comprenant des étapes consistant à mesurer les variations de la consommation électrique du dispositif d'affichage pour chaque ligne d'une image de la série d'images affichées, à partir d'un signal de synchronisation (FR) transmis au début de l'affichage de chaque image de la série d'images, ou en détectant un motif particulier dans les mesures de signaux acquises, le motif particulier étant situé en une position définie dans chaque image de la série d'images.

12. Procédé selon l'une des revendications 1 à 11, dans lequel l'acquisition des mesures de signaux de variation de la consommation électrique du dispositif d'affichage est limitée à un ensemble de LEDs correspondant à une partie de l'écran seulement.

13. Procédé selon l'une des revendications 1 à 12, comprenant une étape de sélection d'une couleur de LED pour afficher le ou les motifs de la série d'images (In-In+3).

14. Appareil comprenant un dispositif d'affichage (DD), un processeur (PRC) connecté au dispositif d'affichage et un organe d'acquisition de mesures de signaux représentatifs de la consommation électrique du dispositif d'affichage, l'organe d'acquisition étant connecté au processeur, le processeur étant configuré pour mettre en œuvre le procédé selon l'une des revendications 1 à 13.

15. Appareil selon la revendication 14, dans lequel l'organe d'acquisition de mesures de signaux représentatifs de consommation électrique comprend au moins l'un des moyens suivants :
une liaison connectée à une borne d'alimentation du dispositif d'affichage (DD) et à une entrée d'un amplificateur (AM),
une résistance (R1) montée en série sur une liaison d'alimentation connectée à la borne d'alimentation du dispositif d'affichage, et un amplificateur différentiel (A1) connecté aux bornes de la résistance,
une résistance (R2) interposée entre une borne de connexion du dispositif d'affichage à une masse de l'appareil (DV3) et la masse de l'appareil, et un amplificateur (A2) connecté à la borne de connexion à la masse,
une sonde électromagnétique (PRB) placée à proximité d'une matrice (DLM, DLM1) de LEDs de lumière du dispositif d'affichage (DD), la sonde étant connectée à un amplificateur différentiel (A3).

## Patentansprüche

1. Verfahren zum Generieren eines Bildsignals eines Objekts (OB) mittels einer Anzeigevorrichtung, die einen Anzeigebildschirm (SB2) vorweist, umfassend Leuchtdioden LEDs (LD), die in Zeilen und Spalten eingerichtet sind, das Verfahren umfassend Schritte, bestehend aus:
mittels des Anzeigebildschirms, Anzeigen (S01, S05, S06) einer Reihe von Bildern (In-In+3), die jeweils ein jeweiliges Muster abbilden, wobei die Anzeige jedes Musters die Aktivierung von mindestens einer LED (LD) der Anzeigevorrichtung (DD) bewirkt und die Emission eines Lichtstrahls zur Folge hat, der identisch mit oder unterschiedlich von dem vorhergehenden Lichtstrahl sein kann, je nachdem, ob das angezeigte Muster identisch mit oder unterschiedlich von dem Muster des vorhergehenden Bildes ist,
Erfassen (S03) einer Vielzahl von Messungen (L1-L4, C1-C4) des elektrischen Verbrauchs der Anzeigevorrichtung im Verlauf der Anzeige jedes Bildes (In-In+3),
Erfassen (T01, T02) einer Vielzahl von Messungen (C5-C8) von Schwankungen des elektrischen Verbrauchs der Anzeigevorrichtung, wobei jede Messung einer Schwankung des elektrischen Verbrauchs repräsentativ für eine Abweichung zwischen einer Messung des elektrischen Verbrauchs der Anzeigevorrichtung während der Anzeige eines Bildes und einer Messung des elektrischen Verbrauchs der Anzeigevorrichtung während der Anzeige eines vorhergehenden Bildes der Reihe von Bildern (In-In+3) ist,
wobei die Messungen des elektrischen Verbrauchs der Anzeigevorrichtung mit der aufeinanderfolgenden Auswahl von LEDs während der Anzeige jedes Bildes der Reihe von Bildern (In-In+3) synchronisiert sind,
und wobei die Versorgungsspannung Schwankungen aufweist, die für das Vorhandensein des Objekts (OB) repräsentativ sind, die sich zu normalen Schwankungen des elektrischen Verbrauchs hinzufügen und für das Bildsignal des Objekts repräsentativ sind,
das Verfahren umfassend einen Schritt des Verarbeitens (T01, T02) der Messungen der Schwankungen des elektrischen Verbrauchs der Anzeigevorrichtung durch statistische Analyse, Korrelation oder künstliche Intelligenz, zum Erhalten des Bildsignals des Objekts.

2. Verfahren nach Anspruch 1, wobei die Erfassung jeder Messung (L1-L4, C1-C4) des elektrischen Verbrauchs der Anzeigevorrichtung im Verlauf der Anzeige eines Bildes (In-In+3) die Erfassung (S03) einer Vielzahl von Messungen (L1-L4, C1-C4) des elektrischen Verbrauchs durch mehrfaches Anzeigen desselben Bildes (S01, S05) umfasst, und die Erfassung (T01, T02) der Vielzahl von Messungen (C5-C8) der Schwankungen des elektrischen Verbrauchs durch mathematische Berechnung oder künstliche Intelligenz auf der Basis der Vielzahl von Messungen des elektrischen Verbrauchs erfolgt, die für jedes mehrfach angezeigte Bild erhalten werden.

3. Verfahren nach einem der Ansprüche 1 und 2, wobei jedes Bild der Reihe von Bildern (In-In+3) dasselbe Muster abbildet, oder, auf äquivalente Weise, die Reihe von Bildern nur ein Bild umfasst, wobei der Lichtstrahl konsistent ist, umfassend den Schritt des Abtastens der Oberfläche des Objekts (OB) durch Bewegen des Objekts relativ zu dem Lichtstrahl.

4. Verfahren nach Anspruch 3, wobei die Anzeige jedes Bildes die aufeinanderfolgende Auswahl von LED-Gruppen (1-d, 2-d, 3-d, 4-d; 1-c, 2-c, 3-c, 4-c; 1-b, 2-b, 3-b, 4-b; 1-a, 2-a, 3-a, 4-a) umfasst, umfassend jeweils mindestens eine LED, und wobei die Messung der Schwankungen des elektrischen Verbrauchs der Vorrichtung durch Vergleichen ihres elektrischen Verbrauchs bei der Auswahl einer LED-Gruppe für eine erste Position des Objekts mit ihrem elektrischen Verbrauch bei der Auswahl derselben LED-Gruppe für nachfolgende Positionen des sich bewegenden Objekts erhalten wird, und zwar für jede bei der Anzeige eines Bildes ausgewählte LED-Gruppe.

5. Verfahren nach einem der Ansprüche 1 und 2, wobei jedes Bild der Reihe von Bildern (In-In+3) ein unterschiedliches Muster abbildet, um den Lichtstrahl zu variieren, wobei das Objekt bezüglich der Anzeigevorrichtung fest ist.

6. Verfahren nach Anspruch 5, wobei die Anzeige jedes Bildes und eines dem Bild zugewiesenen Musters die aufeinanderfolgende Auswahl umfasst von
LED-Gruppen (1-d, 2-d, 3-d, 4-d; 1-c, 2-c, 3-c, 4-c; 1-b, 2-b, 3-b, 4-b; 1-a, 2-a, 3-a, 4-a), jeweils umfassend mindestens eine LED, und wobei die Messung der Schwankungen des elektrischen Verbrauchs der Vorrichtung durch Vergleichen ihres elektrischen Verbrauchs bei der Auswahl jeder LED-Gruppe während der Anzeige eines Bildes mit ihrem elektrischen Verbrauch bei der Auswahl einer anderen LED-Gruppe während der Anzeige eines vorhergehenden Bildes erhalten wird, und so weiter für jedes folgende Bild, wobei die ausgewählten LED-Gruppen, für welche die Schwankungen des elektrischen Verbrauchs der Vorrichtung von einem Bild zum anderen gemessen werden, Gruppen gleichen Ranges gemäß einer vorbestimmten Reihenfolge der Auswahl der LEDs bei der Anzeige jedes Bildes sind.

7. Verfahren nach einem der Ansprüche 1 und 2, wobei die Reihe von Bildern (In-In+3) dasselbe Muster abbildet, oder auf äquivalente Weise, die Reihe von Bildern nur ein Bild umfasst, wobei die Generierung des Bildsignals des Objekts Schritte umfasst, bestehend aus einem Bestimmen von Abweichungen des elektrischen Verbrauchs durch Abziehen, von jeder Messung des elektrischen Verbrauchs, einer Referenzmessung, die jeweils bei Abwesenheit des Objekts in dem Lichtstrahl erfasst wird, und wobei die Messung von Schwankungen des elektrischen Verbrauchs der Vorrichtung durch Vergleichen ihres elektrischen Verbrauchs bei der Auswahl einer LED-Gruppe beim Vorhandensein des Objekts mit ihrem elektrischen Verbrauch bei der Auswahl derselben LED-Gruppe bei Abwesenheit des Objekts erhalten wird.

8. Verfahren nach einem der Ansprüche 1 bis 7, wobei das Objekt ein digitales Abdruckprofil ist.

9. Verfahren nach einem der Ansprüche 1 und 2, wobei das Objekt ein digitaler Abdruck ist und die Anzeige jedes Bildes und eines dem Bild zugewiesenen Musters die aufeinanderfolgende Auswahl von LED-Gruppen (1-d, 2-d, 3-d, 4-d; 1-c, 2-c, 3-c, 4-c; 1-b, 2-b, 3-b, 4-b; 1-a, 2-a, 3-a, 4-a) umfasst, umfassend jeweils mindestens eine LED, und wobei jedes Bild der Reihe von Bildern (In-In+3) dasselbe Muster abbildet, oder auf äquivalente Weise, die Reihe von Bildern nur ein Bild umfasst, das Verfahren umfassend einen Schritt der Speicherung des elektrischen Verbrauchs des Anzeigebildschirms bei der Aktivierung jeder LED-Gruppe bei Anwesenheit des digitalen Abdrucks eines authentischen Benutzers, dann einen Schritt des Vergleichens mit dem gespeicherten elektrischen Verbrauch des elektrischen Verbrauchs des Anzeigebildschirms bei der Aktivierung jeder LED-Gruppe bei Anwesenheit eines zu authentifizierenden digitalen Abdrucks.

10. Verfahren nach einem der Ansprüche 1 bis 9, wobei die Messungen von Signalen, die für Schwankungen des elektrischen Verbrauchs der Anzeigevorrichtung repräsentativ sind, gemäß der einen oder der anderen der folgenden Methoden oder einer Kombination derselben erfasst werden:
durch Messen einer elektrischen Versorgungsspannung (VCC) der Anzeigevorrichtung (DD),
durch Messen einer Intensität eines Versorgungsstroms (Icc) der Anzeigevorrichtung,
durch Messen einer Intensität eines Stroms (Iss), der durch eine Masseverbindung der Anzeigevorrichtung fließt,
durch Messen einer elektromagnetischen Strahlung, die durch die Anzeigevorrichtung (DD) oder den Anzeigebildschirm (DLM, DLM1) emittiert wird.

11. Verfahren nach einem der Ansprüche 1 bis 10, wobei die Bilder (In-In+3) der Reihe von Bildern zeilenweise von LEDs angezeigt werden, wobei die LEDs einer Zeile zum Anzeigen einer Zeile von Bildern gleichzeitig aktiviert werden, das Verfahren umfassend Schritte, bestehend aus einem Messen der Schwankungen des elektrischen Verbrauchs der Anzeigevorrichtung für jede Zeile eines Bildes der angezeigten Reihe von Bildern, aus einem Synchronisationssignal (FR), das zu Beginn der Anzeige jedes Bildes der Reihe von Bildern übertragen wird, oder durch Erkennen eines besonderen Musters in den erfassten Messungen der Signale, wobei das besondere Muster an einer definierten Position in jedem Bild der Reihe von Bildern gelegen ist.

12. Verfahren nach einem der Ansprüche 1 bis 11, wobei die Erfassung von Messungen von Signalen der Schwankung des elektrischen Verbrauchs der Anzeigevorrichtung auf eine Gruppe von LEDs beschränkt ist, die nur einem Teil des Bildschirms entspricht.

13. Verfahren nach einem der Ansprüche 1 bis 12, umfassend einen Schritt der Auswahl einer LED-Farbe zum Anzeigen des oder der Muster der Reihe von Bildern (In-In+3).

14. Gerät, umfassend eine Anzeigevorrichtung (DD), einen Prozessor (PRC), der mit der Anzeigevorrichtung verbunden ist, und eine Erfassungseinrichtung für Messungen von Signalen, die für den elektrischen Verbrauch der Anzeigevorrichtung repräsentativ sind, wobei die Erfassungseinrichtung mit dem Prozessor verbunden ist, wobei der Prozessor zum Implementieren des Verfahrens nach einem der Ansprüche 1 bis 13 konfiguriert ist.

15. Gerät nach Anspruch 14, wobei die Erfassungseinrichtung für Messungen von Signalen, die für den elektrischen Verbrauch repräsentativ sind, mindestens eines der folgenden Mittel umfasst:
einen Anschluss, der mit einer Versorgungsklemme der Anzeigevorrichtung (DD) und mit einem Eingang eines Verstärkers (AM) verbunden ist,
einen Widerstand (R1), der in Reihe an einem Versorgungsanschluss, der mit der Versorgungsklemme der Anzeigevorrichtung verbunden ist, und einem Differentialverstärker (A1), der mit den Klemmen des Widerstands verbunden ist, montiert ist,
einen Widerstand (R2), der zwischen einer Verbindungsklemme der Anzeigevorrichtung an einer Masse des Geräts (DV3) und der Masse des Geräts und einem Verstärker (A2), der mit der Verbindungsklemme verbunden ist, geschaltet ist,
eine elektromagnetische Sonde (PRB), die in der Nähe einer Matrix (DLM, DLM1) von Licht-LEDs der Anzeigevorrichtung (DD) angeordnet ist, wobei die Sonde mit einem Differentialverstärker (A3) verbunden ist.

## Claims

1. A method for generating an image signal of an object (OB) by means of a display device including a display screen (SB2) comprising light-emitting diodes (LD) arranged in rows and columns, the method comprising steps that consist in:
by means of the display screen, displaying (S01, S05, S06) a series of images (In-In+3) each representing one respective pattern, the display of each pattern causing the activation of at least one LED (LD) of the display device (DD) and leading to the emission of a light beam that may be identical or different to the preceding light beam depending on whether the displayed pattern is identical or different to the pattern of the preceding image,
acquiring (S03) a plurality of measurements (L1-L4, C1-C4) of the power consumption of the display device during the display of each image (In-In+3),
acquiring (T01, T02) a plurality of measurements (C5-C8) of the variations in the power consumption of the display device, each measurement of a variation in the power consumption being representative of a divergence between a measurement of the power consumption of the display device during the display of an image and a measurement of the power consumption of the display device during the display of a preceding image of the series of images (In-In+3),
wherein the measurements of the power consumption of the display device are synchronized with the successive selection of LEDs during the display of each image of the series of images (In-In+3).
and in which the supply voltage exhibits variations representative of the presence of the object (OB), which are superimposed on normal variations in the power consumption and are representative of the image signal of the object,
the method comprising a step of processing (T01, T02) the measurements of the variations in the power consumption of the display device, by statistical analysis, correlation or artificial intelligence, to obtain the image signal of the object.

2. The method according to claim 1, wherein the acquisition of each measurement (L1-L4, C1-C4) of the power consumption of the display device during the display of an image (In-In+3) comprises the acquisition (S03) of a plurality of measurements (L1-L4, C1-C4) of power consumption by displaying the same image several times (S01, S05), and the acquisition (T01, T02) of the plurality of measurements (C5-C8) of the variations in the power consumption is carried out by mathematical computation or artificial intelligence based on the plurality of measurements of power consumption obtained for each image displayed several times.

3. The method according to one of claims 1 and 2, wherein each image of the series of images (In-In+3) represents the same pattern or, in an equivalent manner, the series of images comprises only one image, the light beam being invariable, comprising the step that consists in scanning the surface of the object (OB) by moving the object with respect to the light beam.

4. The method according to claim 3, wherein the display of each image comprises successively selecting groups of LEDs (1-d, 2-d, 3-d, 4-d; 1-c, 2-c, 3-c, 4-c; 1-b, 2-b, 3-b, 4-b; 1-a, 2-a, 3-a, 4-a) each comprising at least one LED, and wherein the measurement of the variations in the power consumption of the device is obtained by comparing its power consumption when one group of LEDs is selected for a first position of the object, with its power consumption when the same group of LEDs is selected for subsequent positions of the moving object, and this for each group of LEDs selected when an image is displayed.

5. The method according to one of claims 1 and 2, wherein each image of the series of images (In-In+3) represents a different pattern, to vary the light beam, the object being stationary with respect to the display device.

6. The method according to claim 5, wherein the display of each image and of a pattern assigned to the image comprises the successive selection of groups of LEDs (1-d, 2-d, 3-d, 4-d; 1-c, 2-c, 3-c, 4-c; 1-b, 2-b, 3-b, 4-b; 1-a, 2-a, 3-a, 4-a) each comprising at least one LED, and wherein the measurement of the variations in the power consumption of the device is obtained by comparing its power consumption when each group of LEDs is selected during the display of an image, with its power consumption when another group of LEDs is selected during the display of a preceding image, and so on for each subsequent image, the groups of LEDs selected for which the variations in the power consumption of the device are measured from one image to another being groups of the same rank according to a predetermined order of selection of the LEDs when each image is displayed.

7. The method according to one of claims 1 and 2, wherein the series of images (In-In+3) represents the same pattern or, in an equivalent manner, the series of images comprises only one image, the generation of the image signal of the object comprises steps that consist in determining divergences in power consumption by subtracting from each measurement of power consumption a respective reference measurement acquired in the absence of an object in the light beam, and the measurement of the variations in the power consumption of the device is obtained by comparing its power consumption when one group of LEDs is selected in the presence of the object, with its power consumption when the same group of LEDs is selected in the absence of the object.

8. The method according to one of claims 1 to 7, wherein the object is a fingerprint profile.

9. The method according to one of claims 1 and 2, wherein the object is a fingerprint and the display of each image and of a pattern assigned to the image comprises the successive selection of groups of LEDs (1-d, 2-d, 3-d, 4-d; 1-c, 2-c, 3-c, 4-c; 1-b, 2-b, 3-b, 4-b; 1-a, 2-a, 3-a, 4-a) each comprising at least one LED, and wherein each image of the series of images (In-In+3) represents the same pattern or, in an equivalent manner, the series of images comprises only one image, the method comprising a step of storing in memory the power consumption of the display screen when each group of LEDs is activated in the presence of the fingerprint of an authentic user, then a step of comparing with the power consumption stored in memory the power consumption of the display screen when each group of LEDs is activated in the presence of a fingerprint to be authenticated.

10. The method according to one of claims 1 to 9, wherein the measurements of signals representative of variations in the power consumption of the display device are acquired according to one or the other of the following methods or a combination thereof:
measuring a power supply voltage (VCC) of the display device (DD),
measuring an intensity of a supply current (Icc) of the display device,
measuring an intensity of a current (Iss) passing through a ground connection of the display device,
measuring electromagnetic radiation emitted by the display device (DD) or display screen (DLM, DLM1).

11. The method according to one of claims 1 to 10, wherein the images (In-In+3) of the series of images are displayed row-by-row of LEDs, the LEDs of one row being activated simultaneously to display a row of images, the method comprising steps that consist in measuring the variations in the power consumption of the display device for each row of an image of the series of images displayed, from a synchronization signal (FR) transmitted at the start of the display of each image of the series of images, or upon detecting a particular pattern in the acquired signal measurements, the particular pattern being located in a defined position in each image of the series of images.

12. The method according to one of claims 1 to 11, wherein the acquisition of the measurements of power consumption variation signals of the display device is limited to a set of LEDs corresponding to only one portion of the screen.

13. The method according to one of claims 1 to 12, comprising a step of selecting a color of an LED to display the pattern or patterns of the series of images (In-In+3).

14. An apparatus comprising a display device (DD), a processor (PRC) connected to the display device, and a member for acquiring measurements of signals representative of the power consumption of the display device, the acquisition member being connected to the processor, the processor being configured to implement the method according to one of claims 1 to 13.

15. The apparatus according to claim 14, wherein the member for acquiring measurements of signals representative of power consumption comprises at least one of the following means:
a link connected to a power terminal of the display device (DD) and to an input of an amplifier (AM),
a resistor (R1) mounted in series on a supply link connected to the power supply terminal of the display device, and a differential amplifier (A1) connected to the terminals of the resistor,
a resistor (R2) inserted between a terminal for connecting the display device to a ground of the apparatus (DV3) and the ground of the apparatus, and an amplifier (A2) connected to the ground connection terminal,
an electromagnetic probe (PRB) placed in the vicinity of an LED matrix (DLM, DLM1) of the display device (DD), the probe being connected to a differential amplifier (A3).
